# EUROPEAN PATENT SPECIFICATION

(11) **EP 0 609 881 B1**
(45) Date of publication and mention of the grant of the patent: **11.08.1999**
(21) Application number: 94101647.9
(22) Date of filing: 03.02.1994
(51) Int. Cl.: B29C 67/20, C08J 9/26

(54) **Microporous polymer structures**
Mikroporöse Polymerstruktur
Structures polymères microporeuses

(30) Priority: 05.02.1993 US 14411
(43) Date of publication of application: 10.08.1994
(73) Proprietor: WITCO CORPORATION, Greenwich, Connecticut 06831-2559 (US)
(72) Inventor: Sweeney, Joshua B., Katonah, New York 10536 (US); Schombourg, Jacques Jean Francois Joseph, CH-1291 Commugny (CH); Furrer, Willy, CH-1261 Gingins (CH)
(74) Representative: Wibbelmann, Jobst, Dr., Dipl.-Chem.

(56) References cited:
- EP-A- 0 283 187
- EP-A- 0 430 439
- WO-A-89/10728
- US-A- 3 310 505
- US-A- 3 375 208
- US-A- 3 783 093
- DATABASE WPI Week 8526, Derwent Publications Ltd., London, GB; AN 85-157208 & JP-A-60 090 230 (NIPPON DENSO ET AL.) 21 May 1985

## Description

### Field of the Invention

The present invention relates to microporous polymer structures and processes for making the microporous polymer structures. More specifically, the present invention relates to microporous polymer structures having a plurality of elongated micropores aligned in a generally parallel orientation within the polymer structure.

### Background of the Invention

Microporous polymer structures have been proposed for use in a variety of applications. Typical applications for microporous polymers include, for example, ink pads, felt tip pens, synthetic leather, filter media, and porous delivery devices. Porous delivery devices are often used to disperse a liquid additive, such as, for example, a cross-linking agent, within thermoplastic polymer particles prior to extrusion and cross-linking of the final fabricated polymer part, e.g., cross-linked polyethylene pipe. The use of microporous polymer structures to disperse liquids within solid systems such as described above often provides a more even distribution of the liquid as compared to dispersing the liquids directly into the solid system, particularly when the amount of liquid is small relative to the amount of solid, e.g., less than about 5 volume percent. Such porous delivery devices must have sufficient physical integrity, i.e., mechanical strength, to avoid attrition losses during routine handling.

Several widely different techniques have been proposed for preparing microporous polymer structures. Such techniques include, for example, nucleation, sintering and blending.

In typical nucleation techniques, a non-extractable thermoplastic polymer, i.e., the polymer which ultimately forms the body of the polymer structure, is mixed with an extractable component and heated until the mixture becomes a single homogeneous phase. Then, the single phase mixture is formed into the desired shape and cooled. Upon cooling the extractable component nucleates to form droplets as a second phase within the polymer body. After the polymer body is solidified the extractable component is removed by conventional means, e.g., extraction with a solvent, evaporation or sublimation, to form open cells typically interconnected by narrow micropores. The final product typically has an isotropic, cellular structure. Although microporous polymer structures prepared by nucleation techniques typically have relatively high absorption capacities, e.g., about 60 weight percent or more, they often have slow liquid absorption rates due to the narrow micropores connecting the cells.

Sintering involves heating polymer powders under pressure until they deform in a ductile fashion to form a consolidated porous structure. The use of sintering techniques is generally limited to high molecular weight polymers with low flowability, and typically produces porous polymers containing relatively large pores, i.e., 25 microns and larger. Microporous polymers prepared by sintering are often used for ink pads and felt tip pens due to the structual rigidity of sintered materials. Sintered materials are typically not used as porous delivery devices because of their inability to retain liquids, i.e., by capillarity.

In typical blending techniques, an extractable material is mixed with a non-extractable polymer at a temperature above the melting temperature of the non-extractable polymer and processed through an extruder or other plastics compounding equipment. The product obtained, which comprises two or more phases, is then cooled and the extractable component is then removed by conventional techniques. Blending techniques often require the use of a large proportion of extractable material, i.e., often at least 50% and typically at least 70%, to insure that the extractable material can be removed from the finished product. When smaller proportions of extractable material are employed, i.e., less than about 50%, conventional removal techniques, e.g., solvent extraction, can be ineffective to remove the extractable material since the solvent may not have adequate access to the extractable component to effect the extraction. Due to the high proportion of the extractable component, the microporous polymer structures made by typical blending techniques often have a low degree of physical integrity. Thus, such blending techniques typically require additional thermal processing to consolidate the non-extractable polymer to prepare microporous polymer structures for use as synthetic leathers, fibers, and filter fabrics media. As a result, microporous polymer structures made by typical blending techniques have not been suitable for use as porous delivery devices.

US-A-3 783 093 discloses an extensively fibrillated thermoplastic resin material and method for preparing the same whereby a solid particulate thermoplastic resin which is insoluble in a selected leaching solvent is mixed and fibrillated under heat and pressure with another thermoplastic resin which is soluble in the selected leaching solvent. This document in particular exemplifies the forming of mats and webs.

US-A-3 375 208 relates to a method for preparing a microporous thermoplastic resin material by treating a thermoplastic resin composition with a leaching solvent to remove one or more pore forming agents. This document in particular exemplifies sheets and films.

Accordingly, microporous polymer structures are desired which can provide high liquid absorption rates yet provide sufficient physical integrity to avoid attrition losses during normal handling operations. Such microporous polymer structures would be particularly useful as porous delivery devices. Additionally, a single step forming operation would offer increased efficiency and would represent a significant improvement over existing methods.

### Summary of the Invention

By the present invention microporous polymer structures and processes for the manufacturing thereof are provided. The microporous polymer structures of the present invention have a plurality of elongated micropores aligned in a generally parallel orientation within the polymer body. As a result, the microporous polymer structures can provide higher liquid absorption rates than microporous polymer structures prepared by nucleation techniques and also provide sufficient physical integrity to avoid attrition losses commonly associated with microporous polymer structures prepared by conventional blending techniques.

In one aspect of the present invention there is provided a microporous polymer structure comprising a thermoplastic polymer body having a first end, a second end, at least one side wall disposed between the first end the second end and a plurality of elongated micropores of which at least 50 % are aligned in a generally parallel orientation to the side wall. The micropores have an average pore diameter of from about 0.1 to 50 microns and an average pore length of at least about 10 times the average pore diameter.

In another aspect of the present invention there is provided a process for preparing a microporous polymer structure. The process comprises the steps of:
(a) combining a first thermoplastic polymer and a second thermoplastic polymer to form a blend comprising domains of the first thermoplastic polymer and domains of the second thermoplastic polymer, said first thermoplastic polymer and second thermoplastic polymer being substantially immicible when both the first thermoplastic polymer and second thermoplastic polymer are in a molten state;
(b) melt extruding the blend through a die to form a strand under sufficient shear to elongate the domains of the second thermoplastic polymer and align the elongated domains of second thermoplastic polymer in a generally parallel direction relative to each other to form an extrudate comprising the elongated domains of the second thermoplastic polymer and the domains of the first thermoplastic polymer;
(c) pelletizing the extrudate; and
(d) removing at least a portion of the elongated domains of the second thermoplastic polymer from the extrudate.

### Brief Description of the Figures

FIG. 1 is a photomicrograph at 1000 X amplification of an extended blend, prior to extraction, produced as an intermediate microporous polymer structure in accordance with the present invention showing a section cut parallel to the extrusion direction.
FIG. 2 is a photomicrograph at 1000 X amplification of an extended blend, prior to extraction, produced as an intermediate microporous polymer structure in accordance with the present invention showing a section cut perpendicular to the extrusion direction.
FIG. 3 is a mercury intrusion curve of a microporous polymer structure in accordance with the present invention.
FIG. 4 is a photomicrograph at 1000 X amplification of a microporous polymer structure in accordance with the present invention showing a section cut parallel to the extrusion direction.
FIG. 5 is a photomicrograph at 1000 X amplification of a microporous polymer structure in accordance with the present invention showing a section cut perpendicular to the extrusion direction.
FIG. 6 is a photomicrograph at 1000 X amplification of a microporous polymer structure in accordance with the present invention showing a section cut parallel to the extrusion direction.
FIG. 7 is a photomicrograph at 1000 X amplification of a microporous polymer structure in accordance with the present invention showing a section cut perpendicular to the extrusion direction.
FIG. 8 is a mercury intrusion curve of a microporous polymer structure in accordance with the present invention.
FIG. 9 is a photomicrograph at 1000 X amplification of a microporous polymer structure of a commercially available product.
FIG. 10 is a mercury intrusion curve of a microporous polymer structure of a commercially available product.

### Detailed Description of the Invention

Essentially any thermoplastic polymers can be used to provide the microporous polymer structures of the present invention. Suitable polymers include olefinic polymers, condensation polymers and oxidation polymers.

Suitable olefinic polymers include non-acrylic polyolefins, such as, for example, low density polyethylene, high density polyethylene, polypropylene, polystyrene, polyvinylchloride, acrylonitrile-butadiene-styrene terpolymers, styrene-acrylonitrile copolymers, styrene-butadiene copolymers, poly(4-methyl-pentene-1), polybutylene, polyvinylidene chloride, polyvinyl butyral, chlorinated polyethylene, ethylene-vinyl acetate copolymers, polyvinyl acetate, and polyvinyl alcohol and acrylic polyolefins, such as, for example, polymethyl-methacrylate, polymethyl-acrylate, ethylene-acrylic acid copolymers, and ethylene-acrylic acid metal salt copolymers.

Polyphenylene oxide is representative of the oxidation polymers which may be utilized.

Suitable condensation polymers include, for example, polyethylene terephthalate, polybutylene terephthalate, polyamides such as Nylon 6, Nylon 11, Nylon 13, Nylon 66, polycarbonates and polysulfone.

The microporous polymer structures of the present invention comprise a thermoplastic polymer body comprising one or more thermoplastic polymers such as described above. Typically, the polymer bodies are comprised of low density polyethylene, high density polyethylene, polypropylene, nylon, acrylic polyolefins, polybutylene terephthalate and mixtures thereof.

The thermoplastic polymer body has a first end and second end and at least one side wall disposed between the first end and the second end. The particular cross sectional geometry of polymer body is not critical to the present invention. Thus, the cross sectional geometry can be circular, elliptical, square, rectangular or triangular, for example. Hence, a thermoplastic body having a triangular cross section, for example, would have three side walls. Often, the polymer body will be in the form of a cylindrical pellet. The average particle size of the polymer body is typically from about 0.16 cm to 0.96 cm (about 1/16 to 3/8 in.), although, larger and smaller particles sizes are within the scope of the present invention. As used herein the term "average particle size" refers to the smallest circular opening through which the polymer body can pass. Thus, a cylindrical polymer pellet having diameter of 0.32 cm (1/8 in.) and a length of 0.64 cm (1/4 in.) could pass through a 0.32 cm (1/8 in.) opening. Accordingly, as used herein, such a pellet would have an average particle size of 0.32 cm (1/8 in) . Typically the void fraction of the microporous polymer structure will be less than about 0.7, more typically from about 0.33 to 0.66 and often from about 0.40 to 0.60 on a volume basis. As used herein, the term "void fraction" refers to the volume fraction of the microporous polymer structure that is not occupied by the thermoplastic polymer. In general, microporous polymer structures having higher void fractions are capable of absorbing more liquid than structures having lower void fractions. However, in general, as void fraction increases the physical integrity of the polymer structure decreases which can lead to attrition losses during routine handling operations.

The microporous polymer structures of the present invention have a plurality of elongated micropores therein which are aligned in a generally parallel orientation to the side wall of the polymer body. Since the micropores are generally oriented in the same direction, the polymer body can provide a substantially continuous pathway from one end of the polymer body, i.e., the first end, to the other end of the polymer body, i.e., the second end. This type of morphology can provide a high degree of orientation in the axial direction, i.e., parallel to the side wall, and a lower degree of orientation in the radial direction, i.e., perpendicular to the side wall. As a result of the high degree of elongated pore morphology, the polymer structures of the present invention can provide surprisingly enhanced liquid absorption rates as compared to isotropic microporous polymer structures prepared by nucleation techniques. In addition, quite unexpectedly, the microporous polymer structures of the present invention often have enhanced physical integrity, without additional processing steps are often required when preparing polymer structures made by conventional blending techniques. As a result, the polymer structures of the present invention can provide enhanced physical integrity, e.g., attrition resistance, even at high void fractions, e.g., 0.5 to 0.7. Moreover, unlike porous polymers produced by conventional blending techniques, the structures of the present invention have porosity even at low void fractions, e.g., less than 0.5. Without being bound by any particular theory, it is believed that the generally parallel orientation of the micropores in the polymer structures of the present invention permits a plurality of the micropores to communicte with the ends of the polymer body even at relatively low void fractions, i.e., less than about 0.6 and even less than about 0.5. Such communication between micropores and the ends of the polymer body facilitates easy removal of the extractable components used to create the micropores in the manufacturing process. It is further believed that the high degree of physical integrity of the polymer structures of the present invention is due at least in part from the generally parallel alignment of the domains of the polymer which comprises the polymer body.

It is to be understood that, although a majority of the micropores are generally aligned in a parallel orientation to the side wall, i.e., at least about 50% and preferably at least about 75%, a portion of the micropores, i.e., preferably less than about 10%, may not be aligned in a parallel orientation to the side wall and some pores may, in fact, have no orientation or be perpendicular to the side wall. In addition, it is to be noted that the pores themselves can have different geometries. For example, in some cases, the pores can have a generally tubular geometry. In other cases, the pores can have a folded sheet-like structure. The microporous polymer stuctures of the present invention are preferably non-cellular and anisotropic.

The average pore diameter of the micropores in the polymer structures of the present invention typically range from about 0.1 to 50 microns and preferably range from about 0.5 to 10 microns. As used herein the term "average pore diameter" means the median pore diameter has determined by mercury porosimetry. Mercury porosimetry techniques are known in the art and are described, for example, in Gregg, S.J. and Sing, K.S.W., Adsorption, Surface Area and Porosity, 2 Ed. Academic Press Inc. (1982).

The average pore length of the miropores in the polymer structures of the present invention is at least 10, preferably at least 20, and more preferably at least 50 times the average pore diameter of the micropore. The average pore length of the micropores in a particular polymer can readily be determined by physically measuring, e.g., with a ruler, the length of a representative number of micropores, e.g., about 30, as depicted on a photomicrograph obtained by Scanning Electron Microscopy (SEM). The ratio can be determined by dividing the average pore length by the average pore diameter.

In order to prepare the microporous polymer structures of the present invention, at least two different thermoplastic polymers, such as described above, must be used. One or more thermoplastic polymers must be selected to comprise the polymer body, i.e., first thermoplastic polymer. Additionally, one or more thermoplastic polymers must be selected create the micropores within the structure, i.e., second thermoplastic polymer. The first thermoplastic polymer and second thermoplastic polymer must be immiscible in each other when both polymers are in a molten state, i.e, above the higher melting point of the two polymers. As used herein the term "melting point" means the temperature at which the polymer begins to flow under gravity. Typically, melting points of thermoplastic polymers suitable for use in the present invention will range from about 100 to 400°C. Typically, the melting point of the second thermoplastic polymer will be at least 10°C, and preferably at least 15°C, lower than the melting point of the first thermoplastic polymer. In addition, it is preferred that the melting point of the first thermoplastic polymer be at least 10°C and more preferably at least 20°C lower than the temperature at which the second thermoplastic polymer begins to degrade, i.e., decompose. Furthermore, it is preferred that the second thermoplastic polymer be soluble in a solvent that is a non-solvent for the first thermoplastic polymer. Although any of the above-described polymers can be employed for use as a second thermoplastic polymer, polyvinylacetate is a preferred polymer for use as the second thermoplastic polymer because it is highly soluble in acetone which is a readily available solvent, whereas other typical polymers suitable for use in the polymer body, such as, for example, polyethylene and polypropylene, are insoluble in acetone. Ethylene-vinylacetate copolymers, high enough in vinyl acetate content to be soluble in acetone, are also preferred polymers for use as the second thermoplastic polymer. Based upon the above guidelines those skilled in the art can readily determine the appropriate polymer selection for the particular microporous polymer structure and properties desired.

The first thermoplastic polymer and second thermoplastic polymer are then combined to form a blend comprising domains of the first thermoplastic polymer and domains of the second thermoplastic polymer. If desired, the first thermoplastic polymer and second thermoplastic polymer can be melted prior to, during or subsequent to their combination.

The polymer blend is then melt extruded to form an extrudate, i.e., strand. Melt extrusion techniques, as well as equipment associated therewith, are well known to those skilled in the art. In accordance with the present invention, the melt extrusion is conducted under a sufficient shearing force, i.e., shear, to elongate the domains of the second thermoplastic polymer and aligned the elongated domains of the second thermoplastic polymer in a generally parallel direction relative to each other. The amount of shearing force required can be readily determined by those skilled in the art and is generally dependent on factors such as viscosities of the polymer, the extrusion temperature and the extrusion pressure. Typically, the shearing force, commonly referred to in the art as shear rate, will be at least 0.1 and often from about 1 to 100 reciprocal seconds. Preferably, the extrusion is conducted at a temperature of less than about 20°C above the melting point of the first thermoplastic polymer. In addition to orienting the domains of the second thermoplastic polymer, the domains of the first thermoplastic polymer will also preferably be oriented in a generally parallel direction to the side wall of the polymer body.

The extrudate is preferably cooled to a temperature below the melting point of the first thermoplastic polymer, more preferably at least 5°C and most preferably at least about 10°C lower than the melting point of the first thermoplastic polymer in order to fix the geometry of the micropores. The second thermoplastic polymer can either be molten or solidified during the cooling process. The cooled extrudate is then pelletized, i.e., cut into pellets or granules, in order to form the polymer body of the present invention. Techniques for pelletizing extrudate are well known by those skilled in the art. Preferably, the extrudate is cooled, prior to pelletization, to a temperature sufficient to prevent closing the ends of the micropores during the pelletization.

The second thermoplastic polymer can be removed from the extrudate, preferably after cooling and pelletizing, by any conventional means such as, for example, solvent extraction or chemical decomposition followed by vaporization or evaporation. Solvent extraction using a liquid that is substantially a solvent for the second thermoplastic polymer and substantially a non-solvent for the first thermoplastic polymer is preferred. The selection of suitable solvents can readily be made by one skilled in the art. The solvents can be aqueous or non-aqueous and may include, for example, water, acetone, isopropyl alcohol, methyl ethyl ketone, tetrahydrofuran, ethanol and heptane. Preferably, the solvent extraction is conducted to remove at least a portion, preferably, at least about 80%, more preferably at least about 90% by volume, of the second thermoplastic polymer from the extrudate. Typically, the extrudate is treated with multiple solvent washes, e.g., three or more, for short periods of time, e.g, less than about 2 hours each. The extraction may be conducted by batch or continuous techniques, which are well known to those skilled in the art.

The microporous polymer structures of the present invention can be useful for a variety of end use applications. One preferred end use application is as a porous delivery device for delivering liquids to solid systems. Solid additives may also be delivered if they are melted prior to being absorbed in the microporous polymer structures. For example, in polymer processing it is often desired to distribute relatively small amounts, e.g., less than about 1% by volume, of a liquid additive, e.g., a cross-linking additive, throughout solid polymer particles. Thus, in the manufacture of polyethylene pipe, for example, liquid silane cross-linking agents can be conveniently added to the particles of polyethylene by absorbing them in the microporous polymer structures of the present invention and combining the microporous polymer structures with the polymer particles by conventional techniques. Those skilled in the art will recognize that there will be many other possible uses for the microporous polymer structures for the present invention.

The following examples are provided for illustrative purposes and are not intended to limit the scope of the claims which follow.

The following materials and equipment were used in performing the examples.

**TABLE 1**

| Materials | |
|---|---|
| HDPE | High-density polyethylene available from Dow Chemical Company, Midland, MI; sold as Dow 12050 |
| LLDPE | Linear low-density polyethylene available from Union Carbide, Danbury, CT; sold as Union Carbide DFDA 7047 |
| VLDPE | Very low-density polyethylene available from Union Carbide, Danbury, CT; sold as Union Carbide DFDA 1138 |
| PP | Polypropylene available from Hilmot, Inc., Wilmington, DE; sold as Himont 6801 |
| EP Copolymer | Ethylene-propylene copolymer available from Union Carbide, Danbury, CT; sold as Union Carbide SSB 787 |
| Nylon | Polyamide available from DuPont, Wilmington, DE; sold as Dupont Xytel 330 |
| PBT | Poly(butylene terephthalate) available from General Electric; sold as General Electric Valox 260 HP |
| PVAc-1 | Poly(vinyl acetate) available from Union Carbide, Danbury, CT; sold as Union Carbide AYAA |
| PVAc-2 | Poly(vinyl acetate) available from Union Carbide, Danbury, CT; sold as Union Carbide AYAT |
| PVAc-3 | Poly(vinyl acetate) available from Union Carbide, Danbury, CT; sold as Union Carbide LPS-40AC |
| Accurel® | Porous low density polyethylene available from Enka (a member of the Akzo Group), Obernburg. Germany |
| Silane | Methacryloxypropyl trimethoxysilane available from Union Carbide, Danbury, CT; sold as Union Carbide Silane A-174 |

| Extrusion Equipment | |
|---|---|
| W&P ZSK30 | Werner & Pfleiderer ZSK30, a corotating twin screw extruder with screw diameters of 30 millimeters available from Werner & Pfleiderer GmbH, Stuttgart, Germany |
| Brabender PL-2000 | A counterrotating twin screw extruder with screw diameters of 35 millimeters available from G. W. Brabender Instrument, Inc., South Hackensack, NJ |
| Hartig | A single screw extruder with a 5.08 cm (2") screw diameter available from Battenfeld Blowmolding Machines, Inc., Boonton, NJ |

### EXAMPLE 1

### Preparation of a microporous polymer structure

About 0.68 kg (1.5 pounds) of HDPE in granular form was extruded on the Brabender PL-2000 extruder and pelletized into pellets having an average particle size of 1/4 inch. The pelletized HDPE was then added to 0.68 kg (1.5 pounds) of PVAc-3 and blended by physical agitation.

The physical blend was fed to the hopper of the Brabender PL-2000 extruder and extruded at 155° C through a single-hole rod die to produce an extrudate rope having a diameter of about 0.64 cm (1/4 inch). The rope was cooled in a cooling trough filled with cold water and fed directly to a rotating knife pelletizer, which cut the strand into cylindrical pellets roughly 0.64 cm (1/4 in length) and 0.64 cm (1/4 in) diameter. The extrusion, cooling and pelletization steps were continuous.

The extraction of the PVAc-3 was performed in a batch fashion by multiple washes of the pellets with acetone. A small sample of the pelletized extrudate, approximately 20 grams, was placed in a glass jar containing acetone in a ratio of greater than 5:1 by weight of acetone to PVAc-3 in the pellets. The glass jar was placed on rollers and rolled for one hour. The acetone containing PVAc-3 was decanted and fresh acetone added. This procedure was repeated three times. The washed material was air dried until no discernible odor of acetone remained to yield the microporous polymer structure.

### EXAMPLE 2

### Characterization of a microporous polymer structure.

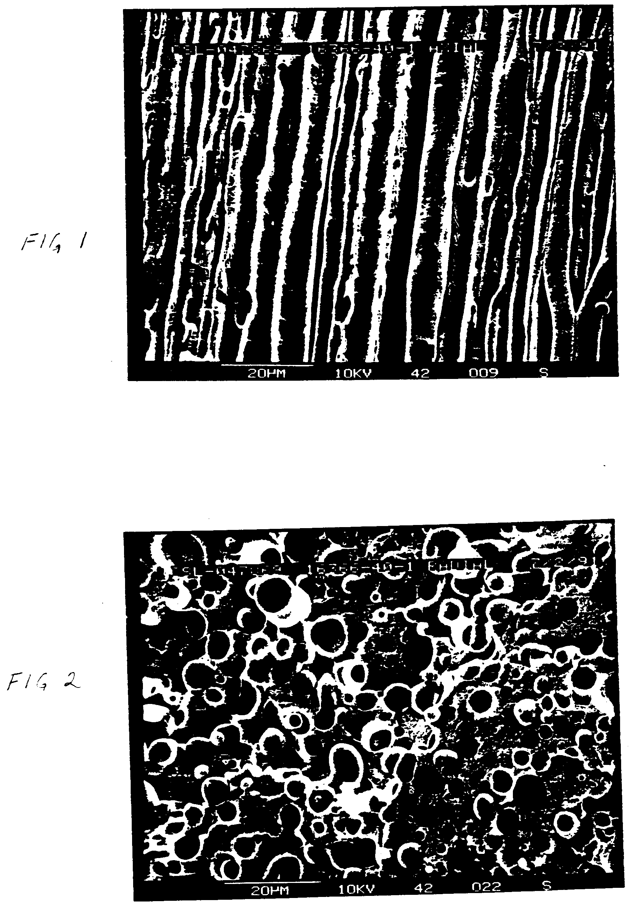

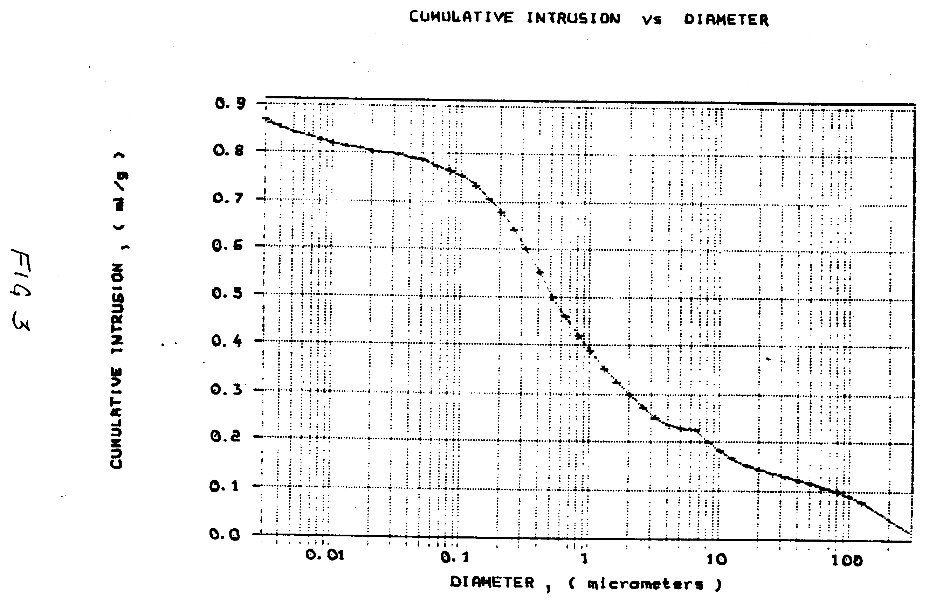

The microporous polymer structure prepared in Example 1 was characterized by SEM, mercury porosimetry, and by an absorption test. SEM photomicrographs of the extruded blend prior to extraction revealed a pore structure comprising elongated tube-like pores (domains of PVAc-3) extending in the direction of extrusion. An example is shown in Fig. 1, which presents a SEM photomicrograph of an unextracted pellet of Example 1, fractured at liquid nitrogen temperatures, providing a longitudinal cross-section. Fig. 2 shows the same material fractured in the transverse direction, showing that the pores are roughly circular in cross-section.

Pore structure was also characterized by mercury intrusion porosimetry, a standard characterization technique used to determine the pore size distribution of porous materials as described above. The mercury intrusion curve from this microporous polymer structure is shown in Fig. 3. The median pore size of the microporous polymer structure as determined by this technique is approximately 0.7 microns.

The absorbency of the microporous polymer structure was characterized by a simple test. A known amount of Silane was added to a 10 g sample of the microporous polymer structure of Example 1 in a glass jar. The sealed glass jar was rolled for approximately an hour to determine whether the liquid was completely absorbed. A dry sample was defined as one that showed no evidence of excess liquid or pellets adhering to the wall of the jar. A-174 was added incrementally until the sample was no longer dry. The absorbency of the sample was defined as the last loading level of A-174 for which the mixture was still dry. For this microporous material, the absorbency was 42% by total weight, i.e., based on the weight of liquid (Silane) plus the weight of the polymer structure.

### EXAMPLE 3

### Preparation of a microporous polymer structure

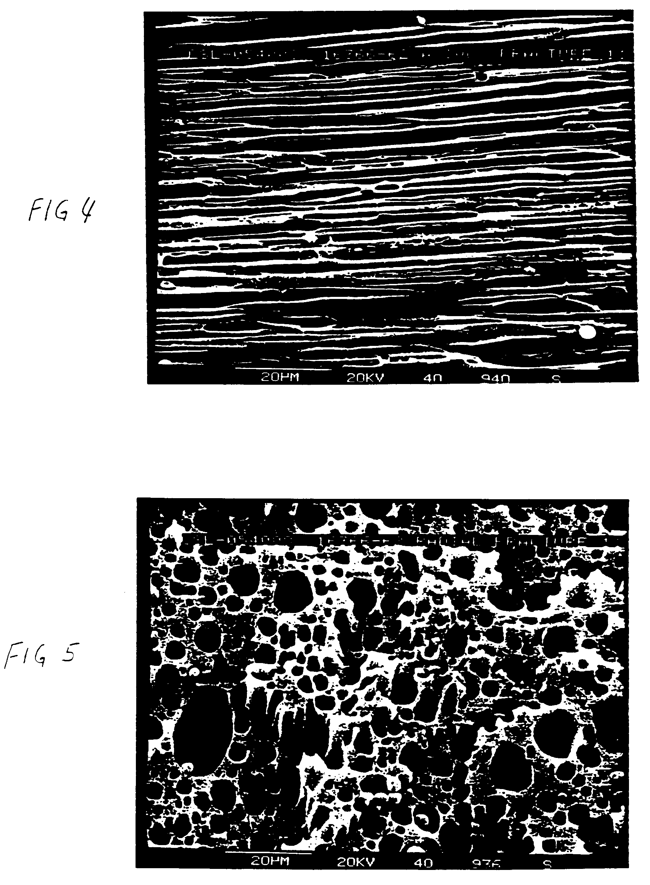

The same microporous polymer structures were prepared exactly as described in Example 1, with the exception that the 50:50 blend, i.e., by weight, of HDPE and PVAc was extruded using the W&P ZSK30 extruder at 140°C. SEM photomicrographs (see Figs. 4 and 5) of the extracted material revealed a microporous structure similar to that shown in Figs. 1 and 2 with the exception thta the domains of PVAc shown in Figs. 1 and 2 appear as pores in Figs. 4 and 5. By visual inspection, it appeared that almost all of the PVAc-1 had been recovered from the HDPE.

### EXAMPLE 4

### Preparation and characterization of a microporous polymer structure

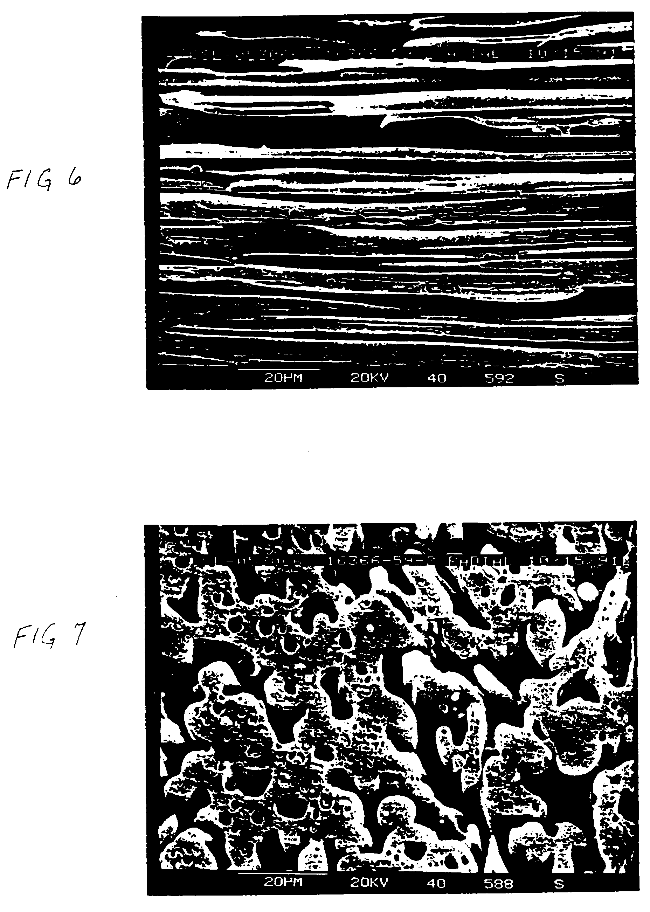

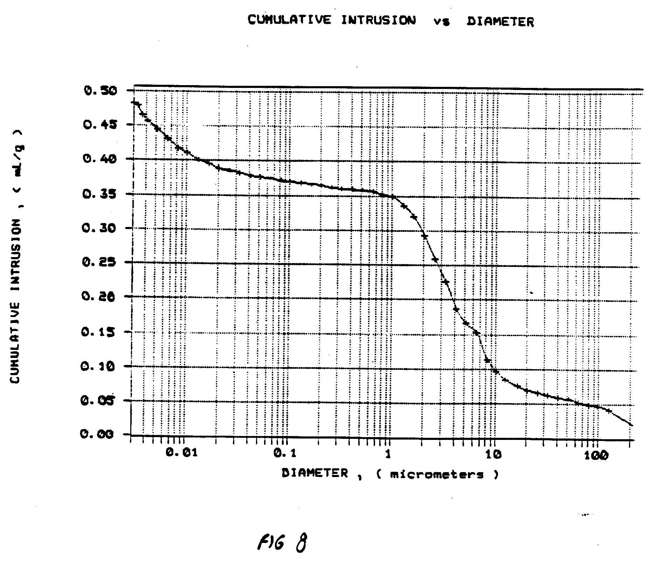

A physical blend of 50% pelleted LLDPE and 50% pelleted PVAc was created by physical agitation. The blend was extruded using the W&P ZSK30 extruder at 140°C, cooled in a water trough, and pelletized to form pellets having 1/4 inch diameter 1/4 inch along. Extraction was accomplished in a three step wash with acetone as described in Example 1. In this case the microporous LLDPE polymer structure upon examination by SEM, revealed a folded sheet-like pore structure, as shown in Figs. 6 and 7. Despite differences in the pore morphology between the microporous HDPE and LLDPE polymer structure, the mercury intrusion curves were remarkably similar in shape. Fig. 8 shows a mercury intrusion curve for the microporous LLDPE polymer structure. Mercury porosimetry indicates that the microporous LLDPE polymer structure had a median pore size of about 3 microns. The microporous LLDPE polymer structure showed an absorbency of 40% by total weight using the procedure described in Example 2.

### COMPARATIVE EXAMPLE 5

### Characterization of Accurel Polymer

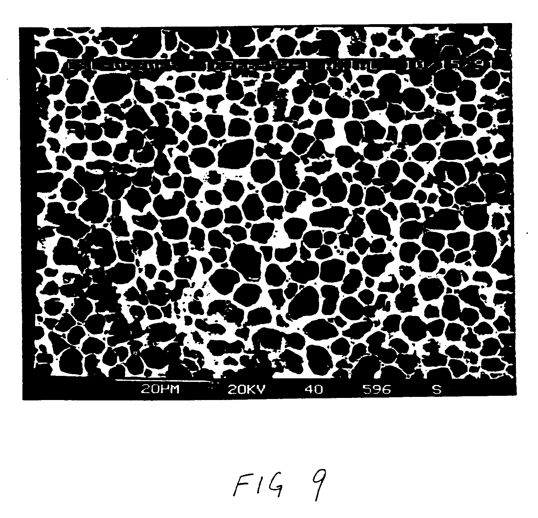

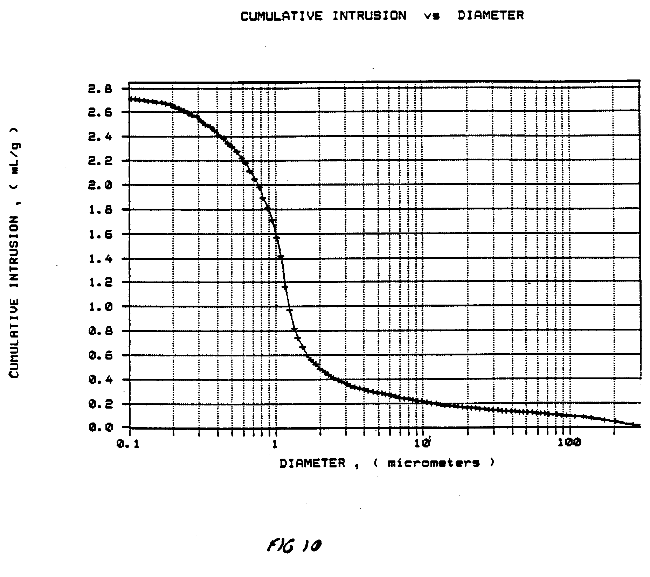

The Accurel polymer is believed to have been made as taught in U.S. Patent No. 4,519,909, and is described as being suitable for use as a carrier for liquid additives. Fig. 9 presents an SEM photomicrograph of the Accurel polymer , which reveals an isotropic cellular structure. Mercury intrusion porosimetry on this material produced the intrusion curve shown in Fig. 10. The average pore diameter was 1 micron.

### COMPARATIVE EXAMPLE 6

### Preparation of a consolidated microporous material

Two pelleted thermoplastic resins, a EP copolymer and PVAc-1 were blended in a ratio of 30:70 on a weight basis and extruded in the Hartig extruder at 190°C. The extrudate strand was passed through a water trough for cooling and fed to a pelletizer, as previously described in Example 1. Upon extraction, the pellets disintegrated to form an unconsolidated fibrous material. This material was unusable as a carrier of liquid additives because it had insufficient mechanical integrity.

### EXAMPLES 7 THROUGH 11

### Preparation of microporous polymer structures

The procedures described in Example 1 was used to prepare the microporous polymer structures listed in Table 2. All of the polymerized structures listed in Table 2 were tested for absorbency according to the procedure described in Example 2, and all demonstrated acceptable absorption capacity.

**TABLE 2**

| Example | Resin 1 | Resin 2 | Blend Ratio (W/W) | Extruder | Extrusion Temp. °C | Abs. Capacity |
|---|---|---|---|---|---|---|
| 7 | VLDPE | PVAc-1 | 40:60 | Hartig | 160 | 50 |
| 8 | PP | PVAc-2 | 40:60 | Hartig | 245 | 50 |
| 9 | EP Copolymer | PVAc-1 | 40:60 | Hartig | 190 | 45 |
| 10 | Nylon | PVAc-1 | 60:40 | Hartig | 240 | 30 |
| 11 | PBT | PVAc-1 | 60:40 | Hartig | 245 | 35 |

### EXAMPLE 12

### Absorption Rate Comparison

A microporous polymer structure was prepared according to the procedure described in Example 1 using LLDPE. About 20 grams of this porous polymer was determined to have the capacity to absorb 24.4 grams of Silane by rolling a jar containing the Silane and the polymer at ambient temperature as described in Example 2. After introducing 24.4 grams of Silane, the pellets were dry, but after introducing 30 grams of Silane the pellets were wet. Thus, the Silane absorptive capacity of the microporous polymer was approximately 55% by total weight. An additional 20 grams of this fresh microporous polymer was weighed into a closed jar with 19.93 grams of Silane and the jar was rolled at ambient temperature until all of the Silane ws absorbed. The Silane was fully absorbed after 7 minutes.

A sample of Accurel polymer was determined to be able to absorb 65 parts of Silane per 35 parts of polymer following the procedure described above. Thus, the Silane absorptive capacity of the Accurel polymer was approximately 65% by total weight. About 20 grams of the Accurel was weighed into a jar with 19.93 grams of Silane. The jar was rolled at ambient temperature until all of the Silane was absorbed. The Silane was fully absorbed after 130 minutes.

This Example shows that porous polymer made according to the present invention absorbs liquid much more rapidly than porous polymer made by a nucleation/extraction process.

The more rapid absorption of liquid by the porous polymer structures of the invention is believed to be due to the uniform small diameter of the pores, which serve to wick the liquid into the pores by capillary action. If the small-diameter pores are interrupted by relatively larger chambers, as they are in the polymer made by a nucleation/extraction process, the capillary forces tending to fill the large chambers may be correspondingly reduced, thereby lowering the overall absorption rate.

## Claims

1. A microporous thermoplastic polymer pellet having a first end, a second end, at least one side wall disposed between the first end and the second end and a plurality of elongated micropores of which at least 50 % are aligned in a generally parallel orientation to the side wall, said micropores having an average pore diameter of from about 0.1 to 50 microns and an average pore length of at least about 10 times the average pore diameter.

2. The polymer structure of claim 1 wherein the thermoplastic polymer is selected from the group consisting of olefinic polymers, condensation polymers, oxidation polymers and mixtures thereof.

3. The polymer structure of claim 2 wherein the thermoplastic polymer is selected from the group consisting of low density polyethylene, high density polyethylene, polypropylene, polyamides, acrylic polyolefins, polybutylene terephthalate and mixtures thereof.

4. The polymer structure of claim 1 wherein the polymer body has an average particle size of from about 0.16 cm to 0.96 cm (about 1/16 in to 3/8 in).

5. The polymer structure of claim 1 wherein the micropores have an average pore diameter of from about 0.5 to 10 microns.

6. The polymer structure of claim 1 having a void fraction of less than 0.70 by volume.

7. The polymer structure of claim 6 having a void fraction of from about 0.4 to 0.6 by volume.

8. The polymer structure of claim 1 wherein the ratio of the average pore length to the average pore diameter is at least about 20:1.

9. The polymer structure of claim 8 wherein the ratio of the average pore length to the average pore diameter is at least about 50:1.

10. A process for preparing microporous thermoplastic polymer pellets comprising:
(a) combining a first thermoplastic polymer and a second thermoplastic polymer to form a blend comprising domains of the first thermoplastic polymer and domains of the second thermoplastic polymer, said first thermoplastic polymer and second thermoplastic polymer being substantially immiscible when both the first thermoplastic polymer and second thermoplastic polymer are in a molten state;
(b) melt extruding through a die the blend to form a strand under a sufficient shear to elongate the domains of the second thermoplastic polymer and align the elongated domains of second thermoplastic polymer in a generally parallel direction relative to each other to form an extrudate comprising the elongated domains of the second thermoplastic polymer and the domains of the first thermoplastic polymer;
(c) pelletizing the extrudate; and
(d) removing at least a portion of the elongated domains of the second thermoplastic polymer from the extrudate.

11. The process of claim 10 further comprising melting the first thermoplastic polymer and second thermoplastic polymer prior to extruding the first thermoplastic polymer and second thermoplastic polymer.

12. The process of claim 10 further comprising cooling the extrudate to a temperature below the melting point of the first thermoplastic polymer prior to removing the domains of the second thermoplastic polymer.

13. The process of claim 12 further comprising pelletizing the extrudate prior to removing the domains of the second thermoplastic polymer.

14. The process of claim 13 wherein the extrudate is cooled prior to pelletizing the extrudate.

15. The process of claim 10 wherein the domains of the second thermoplastic polymer are removed by extraction with a solvent which is a solvent for the second thermoplastic polymer and a non-solvent for the first thermoplastic polymer.

16. The process of claim 11 wherein the melting point of the first thermoplastic polymer is lower than the temperature at which the second thermoplastic polymer begins to decompose.

## Patentansprüche

1. Mikroporöses thermoplastisches Polymerpellet mit einem ersten Ende, einem zweiten Ende, mindestens einer zwischen dem ersten Ende und dem zweiten Ende vorgesehenen Seitenwand und einer Vielzahl von länglichen Mikroporen, von denen wenigstens 50 % allgemein in einer parallelen Orientierung zu der Seitenwand ausgerichtet sind, wobei die Mikroporen einen durchschnittlichen Porendurchmesser von etwa 0,1 bis 50 µm und eine durchschnittliche Porerlänge von mindestens etwa dem 10-fachen des durchschnittlichen Porendurchmessers aufweisen.

2. Polymerstruktur nach Anspruch 1, wobei das thermoplastische Polymer ausgewählt ist aus der Gruppe bestehend aus olefinischen Polymeren, Kondensationspolymeren, Oxidationspolymeren und Mischungen hiervon.

3. Polymerstruktur nach Anspruch 2, wobei das thermoplastische Polymer ausgewählt ist aus der Gruppe bestehend aus Polyethylen niedriger Dichte, Polyethylen hoher Dichte, Polypropylen, Polyamiden, acrylischen Polyolefinen, Polybutylenterephthalat und Mischungen hiervon.

4. Polymerstruktur nach Anspruch 1, wobei der Polymerkörper eine durchschnittliche Teilchengröße von etwa 0,16 cm bis 0,96 cm (etwa 1/16 in. bis 3/8 in.) besitzt.

5. Polymerstruktur nach Anspruch 1, wobei die Mikroporen einen durchschnittlichen Porendurchmesser von etwa 0,5 bis 10 µm besitzen.

6. Polymerstruktur nach Anspruch 1 mit einem Hohlraumanteil, auf Volumenbasis, von weniger als 0,70.

7. Polymerstruktur nach Anspruch 6 mit einem Hohlraumanteil, auf Volumenbasis, von etwa 0,4 bis 0,6.

8. Polymerstruktur nach Anspruch 1, wobei das Verhältnis der durchschnittlichen Porenlänge zu dem durchschnittlichen Porendurchmesser mindestens etwa 20 : 1 ist.

9. Polymerstruktur nach Anspruch 8, wobei das Verhältnis der durchschnittlichen Porenlänge zu dem durchschnittlichen Porendurchmesser mindestens etwa 50 : 1 ist.

10. Verfahren zur Herstellung mikroporöser thermoplastischer Polymerpellets, umfassend:
(a) Zusamenbringen eines ersten thermoplastischen Polymeren und eines zweiten thermoplastischen Polymeren unter Bildung einer Mischung, umfassend Domänen bzw. Bereiche des ersten thermoplastischen Polymeren und Domänen des zweiten thermoplastischen Polymeren, wobei das erste thermoplastische Polymer und das zweite thermoplastische Polymer im wesentlichen unvermischbar sind, wenn sowohl das erste thermoplastische Polymer als auch das zweite thermoplastische Polymer in einem geschmolzenen Zustand vorliegen;
(b) Schmelzextrudieren der Mischung durch eine Düse, um einen Strang unter einer ausreichenden Scherung zu bilden, um die Domänen des zweiten thermoplastischen Polymeren zu verlängern und die verlängerten Domänen des zweiten thermoplastischen Polymeren in einer im allgemeinen parallelen Richtung im Verhältnis zueinander auszurichten, wodurch ein Extrudat gebildet wird, umfassend die verlängerten Domänen des zweiten thermoplastischen Polymeren und die Domänen des ersten thermoplastischen Polymeren;
(c) Pelletisierung des Extrudats; und
(d) Entfernung wenigstens eines Teils der verlängerten Domänen des zweiten thermoplastischen Polymeren aus dem Extrudat.

11. Verfahren nach Anspruch 10, weiter umfassend das Schmelzen des ersten thermoplastischen Polymeren und des zweiten thermoplastischen Polymeren vor dem Extrudieren des ersten thermoplastischen Polymeren und des zweiten thermoplastischen Polymeren.

12. Verfahren nach Anspruch 10, weiter umfassend das Kühlen des Extrudats auf eine Temperatur unterhalb des Schmelzpunktes des ersten thermoplastischen Polymeren vor dem Entfernen der Domänen des zweiten thermoplastischen Polymeren.

13. Verfahren nach Anspruch 12, weiter umfassend das Pelletisieren des Extrudats vor dem Entfernen der Domänen des zweiten thermoplastischen Polymeren.

14. Verfahren nach Anspruch 13, wobei das Extrudat vor dem Pelletisieren des Extrudats gekühlt wird.

15. Verfahren nach Anspruch 10, wobei die Domänen des zweiten thermoplastischen Polymeren durch Extraktion mit einem Lösungsmittel, welches ein Lösungsmittel für das zweite thermoplastische Polymer und ein Nicht-Lösungsmittel für das erste thermoplastischen Polymer ist, entfernt werden.

16. Verfahren nach Anspruch 11, wobei der Schmelzpunkt des ersten thermoplastischen Polymeren niedriger ist als die Temperatur, bei welcher das zweite thermoplastische Polymer sich zu zersetzen beginnt.

## Revendications

1. Pastille de polymère thermoplastique microporeux comportant une première extrémité, une deuxième extrémité, au moins une paroi latérale présente entre la première extrémité et la seconde extrémité et une pluralité de micropores allongés dont au moins 50 % sont alignés suivant une orientation généralement parallèle à la paroi latérale, lesdits micropores ayant un diamètre moyen des pores d'environ 0,1 à 50 micromètres et une longueur moyenne des pores égale à au moins environ 10 fois le diamètre moyen des pores.

2. Structure polymérique suivant la revendication 1, dans laquelle le polymère thermoplastique est choisi dans le groupe consistant en polymères oléfiniques, polymères de condensation, polymères d'oxydation et leurs mélanges.

3. Structure polymérique suivant la revendication 2, dans laquelle le polymère thermoplastique est choisi dans le groupe consistant en polyéthylène basse densité, polyéthylène haute densité, polypropylène, polyamides, polyoléfines acryliques, polymère de téréphtalate de butylène et leurs mélanges.

4. Structure polymérique suivant la revendication 1, dans laquelle le corps polymérique a un diamètre moyen des particules d'environ 0,16 cm à 0,96 cm (environ 1/16 inch à 3/8 inch).

5. Structure polymérique suivant la revendication 1, dans laquelle les micropores ont un diamètre moyen des pores d'environ 0,5 à 10 micromètres.

6. Structure polymérique suivant la revendication 1, ayant une fraction de vides inférieure à 0,70 en volume.

7. Structure polymérique suivant la revendication 6, ayant une fraction de vides d'environ 0,4 à 0,6 en volume.

8. Structure polymérique suivant la revendication 1, dans laquelle le rapport de la longueur moyenne des pores au diamètre moyen des pores est au moins égal à environ 20:1.

9. Structure polymérique suivant la revendication 8, dans laquelle le rapport de la longueur moyenne des pores au diamètre moyen des pores est égal à au moins environ 50:1.

10. Procédé pour la préparation de pastilles d'un polymère thermoplastique microporeux, comprenant les étapes consistant :
(a) à associer un premier polymère thermoplastique et un second polymère thermoplastique pour former un mélange comprenant des domaines du premier polymère thermoplastique et des domaines du second polymère thermoplastique, ledit premier polymère thermoplastique et ledit second polymère thermoplastique étant pratiquement non miscibles lorsque le premier polymère thermoplastique et le second polymère thermoplastique sont l'un et l'autre à l'état fondu ;
(b) à extruder en masse fondue à travers une filière le mélange pour former un brin dans des conditions de cisaillement suffisantes pour l'allongement des domaines du second polymère thermoplastique et l'alignement des domaines allongés du second polymère thermoplastique suivant des directions généralement parallèles l'une à l'autre pour former un extrudat comprenant les domaines allongés du second polymère thermoplastique et les domaines du premier polymère thermoplastique ;
(c) à granuler l'extrudat ; et
(d) à éliminer au moins une partie des domaines allongés du second polymère thermoplastique de l'extrudat.

11. Procédé suivant la revendication 10, comprenant en outre la fusion du premier polymère thermoplastique et du second polymère thermoplastique avant l'extrusion du premier polymère thermoplastique et du second polymère thermoplastique.

12. Procédé suivant la revendication 10, comprenant en outre le refroidissement de l'extrudat à une température inférieure au point de fusion du premier polymère thermoplastique avant l'élimination des domaines du second polymère thermoplastique.

13. Procédé suivant la revendication 12, comprenant en outre la granulation de l'extrudat avant l'élimination des domaines du second polymère thermoplastique.

14. Procédé suivant la revendication 13, dans lequel l'extrudat est refroidi avant la granulation de cet extrudat.

15. Procédé suivant la revendication 10, dans lequel les domaines du second polymère thermoplastique sont éliminés par extraction avec un solvant qui est un solvant pour le second polymère thermoplastique et un non-solvant pour le premier polymère thermoplastique.

16. Procédé suivant la revendication 11, dans lequel le point de fusion du premier polymère thermoplastique est inférieur à la température à laquelle le second polymère thermoplastique commence à se décomposer.
